# EUROPÄISCHE PATENTANMELDUNG

(11) **EP 0 985 717 A2**
(43) Veröffentlichungstag der Anmeldung: **15.03.2000**
(21) Anmeldenummer: 99114968.3
(22) Anmeldetag: 30.07.1999
(51) Int. Cl.: C09G 1/02, C09G 1/08, C08J 7/00

(54) **Poliermittel zur Behandlung von Polyäthylenterephthalat-Oberflächen**

(30) Priorität: 11.08.1998 DE 29814376 U
(71) Anmelder: Menzerna-Werk GmbH & Co.KG, 76470 Ötigheim (DE)
(72) Erfinder: Gaiser,Werner, 76 227 Karlsruhe (DE)
(74) Vertreter: Ratzel, Gerhard, Dr.

(57) **Zusammenfassung**

Gegenstand der Erfindung ist ein Poliermittel zur Behandlung von Polyethylentherephthalat-Kunststoffoberflächen, das aus 32 Gew. % Paraffin mit Erstarrungspunkt 60 - 62°C, 2 Gew. % Stearinsäure, 5 Gew. % Spindelöl und 61 Gew. % alpha-Aluminiumoxid besteht.

Gegebenenfalls kann dieses Poliermittel mit einem weiteren oder mehreren weiteren Poliermitteln kombiniert sein und einen Gehalt an für Poliermittel an sich bekannten Lösungsmitteln aufweisen.

## Beschreibung

Die vorliegende Erfindung betrifft ein Poliermittel zur Behandlung von Polyethylentherephthalat-Oberflächen, die durch diese Behandlung nicht nur poliert, sondern auch zumindest in der Weise oberflächenvergütet werden, daß ihre Kratzfestigkeit verbessert wird. Die Abkürzung von Polyethylentherephthalat lautet: PET.

Bekanntlich werden in stark steigendem Umfang neuerdings Polyethylentherephthalat-Flaschen zum Abfüllen von Getränken, insbesondere von Cola-Getränken, Limonaden und Brunnenwässern verwendet, wobei diese Polyethylentherephthalat-Flaschen einer Mehrfachverwendung an sich in optimaler Weise zugänglich sind.

Es wurde nun gefunden, daß mit dem Poliermittel gemäß vorliegender Erfindung eine oberflächenvergütende Polier-Behandlung von Polyethylentherephthalat-Oberflächen erzielbar ist.

Ein weiterer Vorteil des erfindungsgemäßen lebensmittelechten Poliermittels besteht darin, daß es mit weiteren Poliermittelkomponenten in der Weise kombiniert werden kann, daß ein sogenannter Poliermittel-Satz (= Set) geschaffen wird, wobei damit insgesamt sogenannte Zweier-Kombinationen und Dreier-Kombinationen geschaffen werden.

Diese Kombinations-Poliermittel bestehen insbesondere aus festen Polierpasten, die auch zu einer festen Raumform in der Weise kombiniert sein können, daß sie als Gesamtheit in eine Poliervorrichtung eingeführt werden können. Als Raumform wird beispielsweise die Quader-Form vorgeschlagen.

Nach einer anderen Ausführungsform besteht eine Zweier-Kombination oder eine Dreier-Kombination ebenfalls aus einer geschlossenen Raumform, die Schwächungslinien zum Abbrechen kleinerer Raumform-Einheiten, vergleichbar mit Schokolade-Riegeln, aufweist.

Bei der Zweier-Kombination besteht das erste Kombinationselement a aus dem erfindungsgemäßen Poliermittel, das eine geringe Rauigkeit aufweist sowie aus dem weiteren Kombinationselement b, das eine, verglichen mit a, höhere Rauigkeit aufweist.

Bei der Dreier-Kombination kommt ferner das Kombinationselement c hinzu, das durch eine noch höhere Rauigkeit ausgezeichnet ist.

In der Regel wird der Poliervorgang mit dem Poliermittel höherer bzw. höchster Rauigkeit begonnen und dann die weiteren Kombinationselemente mit absteigender Rauigkeit verwendet.

Das erfindungsgemäße Poliermittel a besteht aus
32 Gewichtsprozent Paraffin mit einem Erstarrungspunkt von 60 - 62° C,
2 Gewichtsprozent Stearinsäure,
5 Gewichtsprozent Spindelöl und
61 Gewichtsprozent alpha-Aluminiumoxid.

Das Kombinationselement b besteht aus
5 - 25 Gewichtsprozent Paraffin,
5 - 25 Gewichtsprozent Fettsäuren,
20 - 60 Gewichtsprozent alpha-Aluminiumoxid,
20 - 40 Gewichtsprozent Siliziumdioxid und
0,1 - 3 Gewichtsprozent Chromoxid.

Das Kombinationselement c besteht aus
0 - 10 Gewichtsprozent Harz,
15 - 35 Gewichtsprozent Paraffin,
0 - 10 Gewichtsprozent Fettsäuren,
0 - 20 Gewichtsprozent Mineralöl,
1 - 5 Gewichtsprozent Weißpigment und
30 - 80 Gewichtsprozent Quarz.

Nach einer weiteren bevorzugten Ausführungsform vorliegender Erfindung weisen die vorgeschlagenen Poliermittel einen Gehalt von an sich für Poliermittel bekannten Lösungsmitteln auf.

Im folgenden wird ein Ausführungsbeispiel der Anwendung des erfindungsgemäßen Poliermittels beschrieben:

### Ausführungsbeispiel:

Flaschen aus Polyethylentherephthalat werden durch eine Zuführung oder von Hand an eine Poliervorrichtung gedrückt. Diese Poliervorrichtung kann eine Bürste, Walze oder Scheibe aus Naturprodukten oder Kunststoff sein, auf die zuvor das Poliermittel durch Andrücken aufgebracht wurde. Die Walzengeschwindigkeit, der Andruck und die Verweilzeit sind den jeweiligen Anforderungen anzupassen. Der Verbrauch an Poliermittel ist von diesen Parametern abhängig.

## Patentansprüche

1. Poliermittel zur Behandlung von Polyethylentheraphthalat-Kunststoffoberflächen, insbesondere von Polyethylen-Flaschen,
dadurch gekennzeichnet, daß es aus
32 Gewichtsprozent Paraffin mit Erstarrungspunkt 60 - 62°C
2 Gewichtsprozent Stearinsäure,
5 Gewichtsprozent Spindelöl und
61 Gewichtsprozent alpha-Aluminiumoxid besteht.

2. Poliermittel nach Anspruch 1,
dadurch gekennzeichnet,
daß es mit einem weiteren Poliermittel, das aus
5 - 25 Gewichtsprozent Paraffin,
5 - 25 Gewichtsprozent Fettsäuren,
20 - 60 Gewichtsprozent alpha-Aluminiumoxid,
20 - 40 Gewichtsprozent Siliziumdioxid und
0,1 - 3 Gewichtsprozent Chromoxid besteht, räumlich kombiniert ist.

3. Poliermittel nach Anspruch 1 - 2,
dadurch gekennzeichnet,
daß es mit einem weiteren Poliermittel, das aus
0 - 10 Gewichtsprozent Harz,
15 - 35 Gewichtsprozent Paraffin,
0 - 10 Gewichtsprozent Fettsäuren,
0 - 20 Gewichtsprozent Mineralöl,
1 - 5 Gewichtsprozent Weißpigment und
30 - 80 Gewichtsprozent Quarz besteht, räumlich kombiniert ist.

4. Poliermittel nach Anspruch 1 - 3,
gekennzeichnet durch einen Gehalt von an sich für Poliermittel bekannten Lösungsmitteln.
